# EUROPÄISCHE PATENTANMELDUNG

(11) **EP 3 623 668 A1**
(43) Veröffentlichungstag der Anmeldung: **18.03.2020**
(21) Anmeldenummer: 19196688.6
(22) Anmeldetag: 11.09.2019
(51) Int. Cl.: F16J 15/3212, B01L 3/02, F16J 15/56

(54) **PIPETTIERKOLBEN-DICHTUNGSANORDNUNG MIT JUSTIERBARER ANPRESSKRAFT EINES DICHTFLÄCHENABSCHNITTS**

(30) Priorität: 12.09.2018 DE 102018215559
(71) Anmelder: Hamilton Bonaduz AG, 7402 Bonaduz (CH)
(72) Erfinder: Walpen, Silvio, 8712 Stäfa (CH); Gysel, Fridolin, 8134 Adliswil (CH); Hilti, Jonas, 9496 Balzers (LI)
(74) Vertreter: Ruttensperger Lachnit Trossin Gomoll

(57) **Zusammenfassung**

Die vorliegende Erfindung betrifft eine Pipettierkolben-Dichtungsanordnung (10), welche sich längs einer eine axiale Richtung definierenden Anordnungsachse (AOA) erstreckt,
- mit einem Dichtungskörper (12), umfassend einen Dichtungsträger (26) mit einer Dichtungsformation (24), wobei die Dichtungsformation (24) auf ihrer radial äußeren Seite einen Dichtflächenabschnitt (24a) aufweist, welcher zur axial gleitenden Anlage an eine Innenfläche (30a) eines Pipettierzylinders (30) eines Pipettierkanals einer Pipettiervorrichtung ausgebildet ist, und
- mit einem Federkörper (14), umfassend einen Federträger (32) mit einer Federformation (34), wobei wenigstens ein axial mit der Dichtungsformation (24) überlappender Axialabschnitt der Federformation (34) als Radial-Vorspannabschnitt (35) radial innerhalb des Dichtflächenabschnitts (24a) angeordnet ist und in Kraft übertragendem Kontakt mit der Dichtungsformation (24) steht, sodass die radial äußere Seite der Dichtungsformation (24) durch den Radial-Vorspannabschnitt (35) nach radial außen belastet ist.

Erfindungsgemäß ist vorgesehen, dass die Pipettierkolben-Dichtungsanordnung (10) einen Justierkörper (16) mit einer Justierformation (42) aufweist, wobei die Justierformation (42) axial dem Dichtungskörper (12) annäherbar und von diesem entfernbar ist, wobei eine axiale Relativbewegung der Justierformation (42) eine Änderung der radialen Vorspannwirkung des Radial-Vorspannabschnitts (35) auf den Dichtflächenabschnitt (24a) bewirkt.

## Beschreibung

Die vorliegende Erfindung betrifft eine Pipettierkolben-Dichtungsanordnung, welche sich längs einer eine axiale Richtung definierenden Anordnungsachse erstreckt,
- mit einem Dichtungskörper, umfassend einen Dichtungsträger und eine vom Dichtungsträger getragene, um die Anordnungsachse umlaufende Dichtungsformation, wobei die Dichtungsformation auf ihrer von der Anordnungsachse abgewandten radial äußeren Seite einen Dichtflächenabschnitt aufweist, welcher zur axial gleitenden Anlage an eine Innenfläche eines Pipettierzylinders eines Pipettierkanals einer Pipettiervorrichtung ausgebildet ist, und
- mit einem Federkörper, umfassend einen Federträger und eine vom Federträger getragene, um die Anordnungsachse umlaufende Federformation, wobei wenigstens ein axial mit der Dichtungsformation überlappender Axialabschnitt der Federformation als Radial-Vorspannabschnitt radial innerhalb des Dichtflächenabschnitts angeordnet und wenigstens abschnittsweise derart in Kraft übertragendem Kontakt mit der Dichtungsformation steht, dass die radial äußere Seite der Dichtungsformation durch den Radial-Vorspannabschnitt nach radial außen belastet ist.

Eine Pipettierkolben-Dichtungsanordnung der eingangs genannten Art ist aus der WO 2010/051824 A bekannt. Der aus der WO 2010/051824 A bekannte Federkörper ist als metallisches topfförmiges Bauteil ausgebildet, dessen Topfmantel die Federformation bildet und dessen Topfboden den Federträger bildet. Der Topfmantel ist durch schmale Schlitze geschlitzt, welche von dem dem Federträger fernen Längsende her axial bis zum Federträger reichen und den Topfmantel in radialer Richtung durchsetzen. Die Schlitze unterteilen den Topfmantel in in Umfangsrichtung um die Anordnungsachse herum angeordnete Blattfedern. Die Schlitze sind in ihrer Umfangsabmessung verglichen mit der in Umfangsrichtung um die Anordnungsachse ebenfalls zu messenden Breite der Blattfedern der Federformation schmal.

Der Federträger der bekannten Pipettierkolben-Dichtungsanordnung ist starr mit einer Pipettierkolbenstange verbunden. An seiner von der Kolbenstange bzw. der Anordnungsachse abgewandten Außenseite ist an dem bekannten Federkörper ein ebenfalls topfförmiger Dichtungskörper aus einem elastomeren Material festgelegt, der den Federkörper an seiner Außenseite bedeckt. Nach radial außen weisende Flächenabschnitte der bekannten Federformation, die mit dornartigen Vorsprüngen in das elastomere Material der Dichtungsformation eindringen, um dieses zu halten, belasten einen Dichtflächenabschnitt der Dichtungsformation nach radial außen, wo im Betrieb der Pipettierkolben-Dichtungsanordnung die Innenfläche eines Pipettierzylinders vorgesehen ist, an welcher der Dichtflächenabschnitt im Betrieb axial gleitend anliegt.

Grundsätzlich werden mit der bekannten Pipettierkolben-Dichtungsanordnung gute Abdichtergebnisse in Pipettierzylindern erzielt. Seit der Anmeldung der WO 2010/051824 A wurden jedoch bedeutende Weiterentwicklungen an Pipettiervorrichtungen erzielt, die die Anforderungen an eine Pipettierkolben-Dichtungsanordnung erheblich verändert haben.

So sind aus den Anmeldungen DE 10 2015 214 566 A und DE 10 2016 220 425 A permanentmagnetische Pipettierkolben als Teil eines linearmotorischen Kolbenantriebs bekannt. Diese permanentmagnetischen Pipettierkolben werden durch den linearmotorischen Antrieb, dessen Läufer sie sind, mit sehr hohen Beschleunigungen zu Bewegungen mit sehr hohen Geschwindigkeiten angetrieben. Dabei wird die Dichtungsformation durch die unvermeidliche Reibung zwischen der Dichtungsformation und dem sie umgebenden Pipettierzylinder, an welchem der Dichtflächenabschnitt der Dichtungsformation anliegt, auf sehr hohe Temperaturen erwärmt. Diese Temperaturen muss die Dichtungsformation aushalten.

Eine ausreichende Temperaturbeständigkeit der Dichtungsformation kann dadurch erreicht werden, dass PTFE als ein Elastomermaterial zu ihrer Bildung verwendet wird. Die Dichtungsformation kann nur PTFE umfassen oder, und das ist bevorzugt, kann zur Reibungsverminderung mit weiterem Material gefüllt sein.

Zwar können diese Dichtungsformationen auf PTFE-Basis hohe Temperaturen aushalten, jedoch setzen sich PTFE-basierte Dichtungsformationen unter der Kraftwirkung des Federkörpers mit der Zeit. Durch dieses auch im nicht-erwärmten Zustand auftretende Kriechverhalten wird die von der Federformation auf die Dichtungsformation ausgeübte radiale Vorspannung mit der Zeit betragsmäßig abgebaut und es kann zu Qualitätseinbußen der Abdichtung zwischen Pipettierkolben und Pipettierzylinder kommen. Qualitätseinbußen an der Abdichtung eines Pipettierkolbens bergen das Risiko von Qualitätseinbußen in den mit einem solchen Pipettierkolben ausgeführten Pipettiervorgängen.

Ganz unabhängig von der tatsächlichen Materialwahl zur Herstellung der Dichtungsformation ist es Aufgabe der vorliegenden Erfindung, die eingangs genannte Pipettierkolben-Dichtungsanordnung derart weiterzubilden, dass sie auch bei Dichtungsformationen mit Kriechneigung ohne Gebrauchslebensdauereinbuße eine gewünschte Dichtungsqualität dauerhaft bereitstellen kann.

Diese Aufgabe wird gemäß der vorliegenden Erfindung gelöst durch eine Pipettierkolben-Dichtungsanordnung der eingangs genannten Art, welche einen Justierkörper mit einer Justierformation aufweist, wobei die Justierformation axial dem Dichtungskörper annäherbar und von diesem entfernbar ist, wobei eine axiale Relativbewegung der Justierformation eine radiale Bewegung der Federformation und damit eine Änderung der radialen Vorspannwirkung des Radial-Vorspannabschnitt auf den Dichtflächenabschnitt bewirkt.

Durch die axiale Bewegbarkeit der Justierformation des Justierkörpers ist sichergestellt, dass der Justierkörper unabhängig von seiner Betriebsstellung an der Pipettierkolben-Dichtungsanordnung in dem Raum Platz findet, welcher im Betrieb der Pipettierkolben-Dichtungsanordnung vom umgebenden Pipettierzylinder bereitgestellt ist. Denn dann, wenn die Pipettierkolben-Dichtungsanordnung betriebsbereit an einem Pipettierkolben einer Pipettiervorrichtung angeordnet ist, fallen die Längsachse des Pipettierkolbens, die Kanalachse des den Pipettierkolben aufnehmenden Pipettierkanals und die Anordnungsachse im Rahmen von für Pipettiervorrichtungen üblichen Toleranzen zusammen.

Da weiter durch die axiale Annäherungs- und Entfernungsbewegung der Justierformation relativ zum Dichtkörper eine radiale Bewegung der Federformation bewirkt werden kann, kann durch die axiale Relativbewegung der Justierformation eine Änderung der radialen Vorspannwirkung erreicht werden, welche der Radial-Vorspannabschnitt auf die Dichtungsformation und damit auf den Dichtflächenabschnitt ausübt.

Somit kann an der Pipettierkolben-Dichtungsanordnung der vorliegenden Anmeldung die radiale Vorspannung des Dichtflächenabschnitts sehr genau eingestellt werden. Damit kann die Anpresskraft, mit welcher der Dichtflächenabschnitt im Betrieb an einer ihn umgebenden Innenfläche eines Pipettierzylinders anliegt, eingestellt werden. Aufgrund dieser grundsätzlichen Einstellbarkeit der radialen Vorspannkraft auf die Dichtungsformation mit dem Dichtflächenabschnitt kann dann, wenn die Vorspannwirkung der Federformation auf die Dichtungsformation setzbedingt allmählich nachlässt, durch Betätigung des Justierkörpers der setzbedingte Vorspannverlust ausgeglichen und die ursprünglich gewünschte Vorspannwirkung wieder hergestellt werden. Eine solche Nachjustierung des Federkörpers durch den Justierkörper kann im Verlauf des Betriebs der Pipettierkolben-Dichtungsanordnung mehrfach erfolgen, sodass auch bei erheblicher Kriechneigung eines an der Bildung der Dichtungsformation beteiligten Materials über lange Zeit eine gewünschte radiale Vorspannung des Dichtflächenabschnitts nach radial außen bezogen auf die Anordnungsachse aufrechterhalten werden kann.

Selbstverständlich ist die betragsmäßige Einstellbarkeit der radialen Vorspannkraft auch bei Dichtungsmaterialien ohne Kriechneigung vorteilhaft, da je nach Einsatzzweck oder/und Einsatzbedingungen eines Pipettierkolbens an diesem vorteilhafte radiale Vorspannungen eingestellt werden können, ohne dass hierfür der konstruktive Aufbau des Pipettierkolbens geändert oder dieser sogar getauscht werden müsste.

Die die Anordnungsachse umgebende Federformation kann eine geschlossen umlaufende Federformation sein, beispielsweise in Gestalt eines Polymer- oder/und Elastomerrings, der durch axiale Verlagerung der Justierformation mehr oder weniger stark nach radial außen gedrängt wird. Wenngleich eine geschlossen umlaufende Ausgestaltung der Federformation nicht ausgeschlossen sein soll, ist sie dennoch wegen der Zugspannungen in Umfangsrichtung, die in einer solchen Federformation bei der Erzeugung von bezüglich der Anordnungsachse radial nach außen wirkenden Vorspannkräften entstehen, nicht bevorzugt. Auch erfordert die axiale Verlagerung der Justierformation relativ zum Dichtungskörper zur Einstellung der radialen Vorspannkraft eine unerwünscht hohe Verlagerungskraft.

Es sei an dieser Stelle klargestellt, dass die vorliegende Anmeldung, sofern im Einzelfall nichts Abweichendes gesagt ist, zur Beschreibung der Pipettierkolben-Dichtungsanordnung und ihrer Bauteile ein auf der Anordnungsachse beruhendes Zylinderkoordinatensystems benutzt, mit einer längs der Anordnungsachse verlaufenden axialen Richtung, einer orthogonal zur Anordnungsachse verlaufenden radialen Richtung und einer um die Anordnungsachse umlaufenden Umfangsrichtung.

Zur Erleichterung der axialen Verlagerung der Justierformation relativ zum Dichtungskörper ist gemäß einer vorteilhaften Weiterbildung der Pipettierkolben-Dichtungsanordnung vorgesehen, dass die Federformation eine Mehrzahl von vom Federträger auskragenden Blattfedern umfasst, welche in Umfangsrichtung um die Anordnungsachse verteilt angeordnet sind und von welchen jede gegen ihre Federvorspannkraft in radialer Richtung verlagerbar ist. Die Blattfedern können mit verhältnismäßig geringem Kraftaufwand durch die Justierformation radial verlagert werden, was die Einstellung der durch den Radial-Vorspannabschnitt erzeugten radialen Vorspannwirkung erleichtert und den dafür erforderlichen Kraftaufwand erheblich reduziert. Um eine axial möglichst kompakte, wenig Bauraum fordernde Federformation zu verwenden, was bei vorgegebener Konstruktion einer Pipettiervorrichtung den maximal möglichen Hub eines die Dichtungsanordnung tragenden Pipettierkolbens erhöht, kragen die Blattfedern bevorzugt zur selben Seite des Federträgers von diesem aus. Zwar können die Blattfedern jeweils an ihren beiden Längsenden mit je einem Teil-Federträger gekoppelt sein, so dass eine axiale Annäherung der Teil-Federträger durch die Justierformation ein radiales Ausbauchen der durch die Blattfedern gebildeten Federformation von der Anordnungsachse weg bewirkt und ein axiales Entfernen der Teil-Federträger voneinander eine entsprechende Verringerung der Ausbauchung bewirkt. Jedoch ist wegen des geringeren Herstellungsaufwands eine Ausgestaltung bevorzugt, bei welcher die Blattfedern einseitig vom Federträger auskragen, also ihr jeweiliges federträgerfernes Längsende frei ist. Ein solcher bevorzugter Federträger hat vorzugsweise eine abstrakt kronenförmige Gestalt.

Ganz grundsätzlich kann der Federkörper aus mehreren, zunächst gesondert voneinander hergestellten Bauteilen gebaut sein. Aus Gründen eines möglichst niedrigen Herstellungsaufwandes und einer möglichst geringen Bauteileanzahl der Pipettierkolben-Dichtungsanordnung ist der Federkörper bevorzugt einstückig ausgebildet. Ein solcher bevorzugter monolithischer Federkörper kann als Metallbauteil aus einem Blechrohling ausgestanzt und durch Umformen in seine gewünschte Gestalt gebracht sein.

Da der für die Pipettierkolben-Dichtungsanordnung der vorliegenden Anmeldung verwendete Federkörper für die Ausbildung der Pipettierkolben-Dichtungsanordnung besonders vorteilhaft ist, betrifft die vorliegende Erfindung auch einen einstückig ausgebildeten Federkörper für eine Pipettierkolben-Dichtungsanordnung, umfassend einen Federträger und eine Federformation mit einer Mehrzahl von vom Federträger zur gleichen Seite abstehenden Blattfedern. Auch ein solcher Federkörper ist aus der WO 2010/051824 A bekannt. In der vorliegenden Anmeldung beschriebene vorteilhafte Weiterbildungen der Pipettierkolben-Dichtungsanordnung die durch eine besondere Ausbildung des Federkörpers erreicht werden, sind auch Weiterbildungen des Federkörpers.

Bei der bevorzugten einstückigen Ausführung des Federkörpers ist die Verlagerung der Mehrzahl von Blattfedern relativ zum Federträger eine Verformung des Federkörpers. Zum einen können die Blattfedern um ihren Anlenkort, an welchem sie mit dem Federträger verbunden sind, gegen ihre Materialelastizität relativ zum Federträger geneigt werden. Zum anderen können die Blattfedern selbst um eine zu ihrer jeweiligen Blattfederlängsachse orthogonale Biegeachse gegen ihre Materialelastizität gebogen werden. Bei der Biegesteifigkeit von Blattfedern spielt selbstverständlich neben der Materialelastizität auch die Gestalt der Blattfedern eine Rolle. Bevorzugt sind die Blattfedern jedoch jeweils - mit Ausnahme des besagten umgeformten Anlenkortes - eben oder zumindest nicht um eine zu ihrer in Auskragrichtung verlaufenden Blattfederlängsachse, oder im Falle einer gekrümmten Blattfeder zu einer Tangente an ihre Blattfederlängsachse, parallele Krümmungsachse gekrümmt. Der letztgenannte Fall ist nachfolgend als "in Umfangsrichtung ungekrümmt" bezeichnet. Der Federträger ist bevorzugt ein ebener Federträger, da der Federkörper, wie oben bereits geschildert, bevorzugt aus einem ebenen Blechrohling gebildet ist. Somit ist der Federkörper durch die Umformung der Blattfedern relativ zum Federträger ein dreidimensionaler Körper, jedoch sind seine einzelnen Abschnitte: Federformation bzw. Blattfedern und Federträger, jeweils für sich genommen bevorzugt eben.

Zur schonenden mechanischen Wechselwirkung mit der Dichtungsformation sind die Blattfedern wenigstens an ihrer radial äußeren Seite glatt, also ohne Vorsprünge und bevorzugt auch ohne Vertiefungen. Wegen der bevorzugten Herstellung aus einem Blechrohling gilt dies vorteilhafterweise auch für die radial innere Seite der Blattfedern.

Eine Vorspannwirkung der Blattfedern auf die Dichtungsformation und damit auf den nach radial außen weisenden Dichtflächenabschnitt kann dadurch erreicht werden, dass jede der Blattfedern an einem Anlenkort mit dem Federträger verbunden ist, und an einem vom Anlenkort bezüglich der Anordnungsachse oder auch bezüglich einer individuellen Blattfeder-Längsachse axial entfernt gelegenen Kontaktort mit der Dichtungsformation in Kraft übertragendem Kontakt steht. Der Anlenkort ist bei der bevorzugten umgeformten Ausgestaltung des Federkörpers als Biegebauteil der oben genannte Anlenkort, an welchem die Blattfedern vom Federträger ausgehend auskragen.

Grundsätzlich kann der gesamte Federkörper oder kann wenigstens die gesamte Federformation, also beispielsweise die Mehrzahl von Blattfedern, in dem Dichtungsmaterial der Dichtungsformation eingebettet sein. Dann stehen die Blattfedern über einen Großteil ihrer Länge oder über ihre gesamte Länge mit der Dichtungsformation in Kontakt. Durch axiales Bewegen der Justierformation relativ zum Dichtungskörper kann dann Material der Federformation, gegebenenfalls unter Vermittlung von durch Einbettung der Federformation radial innerhalb der Federformation gelegenes Dichtungsmaterial nach radial außen verdrängt und somit die Vorspannwirkung der Federformation erhöht werden. Durch Bewegung der Justierformation in entgegengesetzte Richtung ist ein entsprechend gegenteiliger Effekt erzielbar.

Ebenso kann der Federträger insgesamt oder wenigstens die Federformation nur an ihrer Außenseite, insbesondere an der radial außen liegenden Seite mit dem Dichtungskörper oder wenigstens mit der Dichtungsformation verbunden sein, etwa durch Anvulkanisieren oder durch Verkleben. Auch dann erstreckt sich der Kontakt der Dichtungsformation mit der Federformation im Wesentlichen vom Anlenkort kontinuierlich über die Länge der Blattfedern bis zu einem Kontaktende oder bis zum Ende der Blattfedern.

Bevorzugt ist jedoch der Federträger austauschbar am Dichtungskörper angeordnet, sodass die Blattfedern lediglich in einem lösbaren Anlagekontakt mit der Dichtungsformation stehen. Ebenso bevorzugt ist der Federträger nicht unmittelbar mit Dichtungsmaterial des Dichtungskörpers verbunden.

In diesem Fall kann der Federkörper in einen von der Dichtungsformation radial außen umgebenen Hohlraum axial eingeführt und aus diesem wieder herausgezogen werden. Der Federträger weist dabei bevorzugt einen kleineren Durchmesser auf als eine den Hohlraum nach radial außen begrenzende Grenzfläche der Dichtungsformation.

Ebenso bevorzugt befinden sich auch die Anlenkorte der Blattfedern am Federträger mit radialem Abstand von der Dichtungsformation radial innerhalb derselben bzw. radial innerhalb der den Hohlraum begrenzenden Grenzfläche, sodass am Anlenkpunkt kein Kontakt der Blattfedern mit der Dichtungsformation vorliegt. Die Blattfedern stehen dann bevorzugt vom Federträger mit einer Neigung nach radial außen ab, sodass bei einem vom Dichtungskörper losgelöst betrachteten, von einer Vorspannwirkung unbelasteten Federkörper die vom Federträger fern liegenden Längsenden der Blattfedern ganz allgemein auf einer um die Anordnungsachse geschlossen umlaufenden Linie, vorzugsweise Kreislinie, gelegen sind, die eine größere Fläche umschreibt als die ebenfalls um die Anordnungsachse umlaufende Grenzfläche der Dichtungsformation. Dies gilt insbesondere für den axialen Endbereich der Grenzfläche, welcher eine Eintrittsmündung für den Federkörper in den von der Dichtungsformation umgebenen Hohlraum bildet.

Ein derart gestalteter Federkörper kann durch die Justierformation axial in den von der Dichtungsformation umgebenen Hohlraum hineinbewegt werden, wobei die in der beschriebenen Weise schräg vom Federträger abstehenden Blattfedern ab einer abhängig von der Schräge der Blattfedern abhängigen Eindringtiefe des Federträgers bzw. des Federkörpers in den von der Dichtungsformation umgebenen Hohlraum mit ihrer von der Anordnungsachse weg weisenden Seite in Anlagekontakt mit der Dichtungsformation gelangen.

Ausgehend von dem so einmal hergestellten Anlagekontakt führt ein weiteres axiales Einführen des Federkörpers in den von der Dichtungsformation umgebenen Hohlraum zu einer Verformung der Blattfedern nach radial innen zur Anordnungsachse hin und somit zu einer von der axialen Eindringtiefe des Federkörpers in den von der Dichtungsformation umgebenen Hohlraum abhängigen radialen Vorspannkraft, welche die Blattfedern auf die Dichtungsformation ausüben. Mit der Ausübung dieser radialen Vorspannkraft des Radial-Vorspannabschnitts der Federformation auf die nach radial innen weisende Grenzfläche der Dichtungsformation wird auch der der Grenzfläche entgegengesetzte nach radial außen weisende Dichtflächenabschnitt der Dichtungsformation nach radial außen vorgespannt.

Da die Dichtungsformation in der Regel stetig, bevorzugt sogar kreisförmig um die Anordnungsachse umläuft, die Blattfedern jedoch bevorzugt aus einem ebenen Blechrohling durch Umformen gebildet sind, liegen vorrangig am Kontaktort der Blattfedern die Blattfedern mit ihren die Blattfedern in Umfangsrichtung begrenzenden Randabschnitten an der Dichtungsformation an. Insofern ist der Kontaktort einer ebenen oder zumindest längs der Umfangsrichtung ungekrümmten Blattfeder durch zwei Teil-Kontaktorte gebildet, an jedem Umfangsrandabschnitt der Blattfeder je einer. Eine bevorzugte ebene oder zumindest in Umfangsrichtung ungekrümmte Blattfeder übt daher nicht über ihre gesamte in Umfangsrichtung um die Anordnungsachse zu messende Breite einen gleichmäßigen Kontakt und damit eine gleichmäßige Vorspannung auf den Dichtungsabschnitt aus.

Um sicherzustellen, dass die Teil-Kontaktorte der Blattfedern möglichst äquidistant in Umfangsrichtung um die Anordnungsachse verteilt gelegen sind, ist gemäß einer bevorzugten Weiterbildung der vorliegenden Erfindung vorgesehen, dass jede der Blattfedern einen mit Abstand vom Anlenkort gelegenen Kontaktabschnitt aufweist, in welchem der Kontaktort liegt, wobei sich die in Umfangsrichtung um die Anordnungsachse zu messende Breite der Blattfedern längs dem Kontaktabschnitt nicht ändert und wobei der in Umfangsrichtung um die Anordnungsachse zu messende Abstand zwischen zwei in Umfangsrichtung benachbarten Blattfedern betragsmäßig um nicht mehr als 10 % von der Breite der Blattfedern im Kontaktabschnitt verschieden ist, vorzugsweise um nicht mehr als 5 % verschieden ist, besonders bevorzugt gleich der Breite der Blattfedern im Kontaktabschnitt ist.

Dann können, wenn der Kontaktabschnitt an der Grenzfläche, insbesondere an der Mündung des von der Dichtungsformation umgebenen Hohlraums, anliegt, die Blattfedern zusammen mit dem Federträger axial relativ zum Dichtungskörper bewegt werden, ohne dass sich der Abstand der Kontaktorte in Umfangsrichtung verändert. Je länger der Kontaktabschnitt in Längsrichtung der Blattfedern ausgebildet ist, desto größer ist der axiale Verlagerungsspielraum, längs welchem der Federkörper relativ zur Dichtungsformation verlagert werden kann, ohne dass sich die Umfangsabstände der Kontaktorte, insbesondere der Teil-Kontaktorte, ändern.

Die oben genannte Grenzfläche der Dichtungsformation bildet somit an der oben beschriebenen bevorzugten Weiterbildung der vorliegenden Pipettierkolben-Dichtungsanordnung eine der Anordnungsachse zugewandte radial innere Anlagefläche, mit welcher der von der Anordnungsachse abgewandte Kontaktabschnitt der Blattfedern in Anlageeingriff steht.

Somit kann durch eine Relativbewegung der Justierformation relativ zum Dichtungskörper der axiale Abstand zwischen Anlenkort und Kontaktort oder/und eine Neigung der Blattfedern relativ zur Anordnungsachse und folglich auch die von den Blattfedern ausgeübte Vorspannwirkung einfach und hochgenau veränderbar sein. Mit der Veränderung des axialen Abstands zwischen Anlenkort und Kontaktort ändert sich in der Regel die axiale Überlappung von Federkörper und Dichtungsformation und somit die axiale Ausdehnung des Radial-Vorspannabschnitts.

Zur Erzielung einer in Umfangsrichtung um die Anordnungsachse möglichst gleichmäßigen Vorspannwirkung können die Blattfedern äquidistant um die Anordnungsachse herum verteilt angeordnet sein. Aus dem gleichen Grund weisen die Blattfedern bevorzugt die gleiche Gestalt auf. Die vorzugsweise in Umfangsrichtung um die Anordnungsachse ungekrümmten Blattfedern sind bevorzugt derart am Federträger angeordnet oder/und ausgebildet, dass sie - bevorzugt längs ihrer gesamten Blattfederlänge, wenigstens jedoch längs eines Blattfederlängsabschnitts - bei Betrachtung eines Querschnitts in einer zur Anordnungsachse orthogonalen Schnittebene eine Tangente an einen zur Anordnungsachse zentrischen Kreis um die Anordnungsachse bilden. Dabei können grundsätzlich unterschiedliche Blattfedern in einer Schnittebene Tangenten an unterschiedlich große konzentrische Kreise um die Anordnungsachse bilden. Bevorzugt bilden die Blattfedern jedoch zur Bereitstellung einer einheitlichen radialen Vorspannwirkung in Umfangsrichtung um die Anordnungsachse in einer Schnittebene Tangenten an ein und denselben zur Anordnungsachse zentrischen Kreis.

Um zu erreichen, dass eine die radiale Vorspannkraft verändernde elastische Biegung der Blattfedern um eine zur Anordnungsachse orthogonale Biegeachse möglichst nah am Federträger oder möglichst nicht am Kontaktort erfolgt, kann wenigstens ein Teil der Blattfedern, vorzugsweise die Mehrzahl von Blattfedern, an einem vom Federträger ferner gelegenen Ort eine größere in Umfangsrichtung um die Anordnungsachse zu messende Breite aufweisen als an einem dem Federträger näher gelegenen Ort. Bevorzugt ist der oben genannte Kontaktabschnitt mit einheitlicher Breite der breiteste Abschnitt der Blattfedern. Von diesem können sich die Blattfedern zum Federträger hin kontinuierlich verjüngen. Weiter bevorzugt verjüngen sich die Blattfedern entlang ihrer Längserstreckung beiderseits ihres jeweiligen Kontaktabschnitts, um an ihren freien, vom Federträger fernen Längsenden die Dichtungsformation möglicherweise beschädigende Ecken zu vermeiden. Daher sind die freien Längsenden der Blattfedern bevorzugt abgerundet.

Dann, wenn der Federkörper das oben erwähnte bevorzugte Biegebauteil ist, kann die Federformation bezüglich des Federträgers um eine Biegeachsenanordnung gebogen sein. Bevorzugt umfasst die Biegeachsenanordnung eine Biegeachse pro Blattfeder, welche am Anlenkort der Blattfeder tangential an einem bevorzugt kreis- oder ringförmig ausgebildeten Federträger verläuft.

Der Federkörper ist zur Sicherstellung eines dauerhaft gleichen Elastizitätsmoduls vorzugsweise ein Metallbauteil, aus hygienischen Gründen bevorzugt aus nichtrostendem Federstahl. Wegen der Mehrzahl vorhandener Blattfedern am Federkörper reicht eine Materialdicke des Federkörpers von zwischen 0,075 mm und 0,2 mm aus. Bevorzugt beträgt die Materialdicke zwischen 0,09 mm und 0,11 mm.

Wegen seiner besonders einfachen Herstellung aus einem Blechrohling weist der Federkörper über seine im Wesentlichen gesamte Erstreckung bevorzugt eine einheitliche Bauteildicke auf.

Zur einfachen aber wirkungsvollen Festlegung des Federkörpers am Dichtungskörper kann der Federkörper, insbesondere der Federträger, vom Justierkörper durchsetzt sein. Der Federträger kann hierzu eine ihn in Dickenrichtung durchsetzende Öffnung aufweisen. Eine diese Öffnung zentral gedacht durchsetzende virtuelle Federkörper-Längsachse fällt im betriebsbereiten Zustand der Pipettierkolben-Dichtungsanordnung im Rahmen von für Pipettiervorrichtungen üblichen Fertigungstoleranzen mit der Anordnungsachse zusammen.

Zur einfachen, aber sicheren und positionsgenauen Anordnung der Justierformation am Dichtungskörper kann der Justierkörper eine Stellformation aufweisen, welche sich im Formschlusseingriff mit einer Gegenstellformation des Dichtungskörpers befindet, wobei durch Relativbewegung von Stellformation und Gegenstellformation die Justierformation axial an den Dichtungskörper annäherbar und von diesem entfernbar ist. Die Stellformation kann, insbesondere für komplexe Kinematiken des Justierkörpers, Teil einer Zapfen-Nut-Kulissenführung sein, ist jedoch aus Gründen einfacher Fertigung bei gleichzeitig hoher Tragfähigkeit und guter Positionssicherheit wegen Selbsthemmung ein Gewinde. Entsprechendes gilt für die Gegenstellformation

Daher ist der Justierkörper bevorzugt eine Justierschraube. Der Schraubenkopf der Justierschraube ist dann bevorzugt die Justierformation. Der Schaft der Justierschraube kann gemäß den obigen Ausführungen den Federträger durchsetzen, wobei der Federträger bevorzugt an einer zum Schaft hin weisenden Seite des Schraubenkopfes der Justierschraube anliegt. So kann die von der Federformation des Federkörpers ausgeübte radiale Vorspannkraft dauerhaft aufrechterhalten werden. Die Federformation, insbesondere die Mehrzahl von Blattfedern, umgeben den Schraubenkopf radial außen, jedoch mit Abstand von diesem, sodass am Federkörper eindeutige und vom Schraubenkopf bevorzugt unbeeinflusste Verformungsverhältnisse der Federformation bezüglich des Federträgers vorliegen.

Grundsätzlich können der Dichtungsträger und die Dichtungsformation von ursprünglich gesondert hergestellten und dann miteinander montierten Bauteilen gebildet sein. Bevorzugt ist jedoch die Dichtungsformation einstückig mit dem Dichtungsträger ausgebildet. Dies ermöglicht auch die Bildung betriebssicherer dünnwandiger Dichtungsformationen aus elastomerem Material oder aus einem Material mit elastomerer Matrix. Bei mehrteiliger Ausbildung könnte eine dünnwandige elastomere Dichtungsformation nur mit Schwierigkeiten an einen Dichtungsträger anordenbar sein.

Das Material der Dichtungsformation umfasst bevorzugt wegen seiner Temperaturbeständigkeit PTFE. Aus tribologischen Gründen kann das PTFE als Matrixmaterial mit mineralischen Partikeln, aus etwa Graphit oder Glimmer, gefüllt sein.

Bevorzugt ist der gesamte Dichtungskörper einstückig ausgebildet, wenigstens jedoch die Dichtungsformation, der Dichtungsträger und ein die Gegenstellformation aufweisender Abschnitt des Dichtungskörpers. Der elastomere Dichtungskörper kann eine Gewindebuchse aus Metall oder aus einem festeren Material als das Dichtungsmaterial aufweisen, welche in den Dichtungskörper eingeklebt oder einvulkanisiert oder sonst wie mit diesem verbunden ist. Die Justierschraube kann dann in diese Gewindebuchse einschraubbar sein.

Der Dichtungskörper weist bevorzugt in einem von der Dichtungsformation axial entfernt gelegenen Axialabschnitt eine Ankerformation zur Anbringung an einem Pipettierkolben auf. Bevorzugt ist der Dichtungskörper an seinem von der Dichtungsformation fern liegenden Längsende zur Einführung in ein Rohr eines Pipettierkolbens ausgebildet, sodass bevorzugt der zur Einführung in das Rohr ausgebildete Längsendabschnitt des Dichtungskörpers einen geringeren Durchmesser aufweist als die Dichtungsformation.

Die Dichtungsformation ist bevorzugt an einem Längsende des Dichtungskörpers angeordnet. Der bevorzugt von der Dichtungsformation umgebene Hohlraum ist zur Hineinbewegung des Federträgers in diesen in Richtung vom Dichtungsträger weg offen. Die Blattfedern des Federkörpers kragen gemäß einer bevorzugten Ausführungsform der vorliegenden Erfindung in Richtung vom Dichtungsträger weg vom Federträger aus.

Die Ankerformation kann einen oder mehrere, dann axial mit Abstand voneinander ausgebildete, umlaufende Radialvorsprünge am Dichtungskörper umfassen, welche vorzugsweise zu dem Einführlängsende des Dichtungskörpers hin verjüngt ausgebildet sind, zu dem entgegengesetzten, die Dichtungsformation aufweisenden Längsende jedoch nicht. Dadurch kann ein Einführen des Dichtungskörpers in ein Rohr eines Pipettierkolbens erleichtert, das Herausziehen des Dichtungskörpers aus dem Rohr jedoch erschwert werden.

Die vorliegende Erfindung betrifft weiter einen Pipettierkolben, umfassend ein Kolbengerüst, insbesondere das oben genannte Rohr als ein solches Kolbengerüst, eine Mehrzahl von Permanentmagneten, und wenigstens eine Pipettierkolben-Dichtungsanordnung gemäß obiger Beschreibung an wenigstens einem Längsende, vorzugsweise an beiden Längsenden des Pipettierkolbens. Die Anordnungsachse ist mit einer Längsachse des Kolbens im Rahmen von für Pipettiervorrichtungen üblichen Toleranzen kollinear. Zur Montage- und Demontageerleichterung ist die Pipettierkolben-Dichtungsanordnung nur in das Kolbengerüst eingesteckt und nur reibschlüssig am Kolbengerüst gehalten, beispielsweise durch die oben genannte Ankerformation.

Ebenso betrifft die vorliegende Erfindung eine Pipettiervorrichtung mit wenigstens einem sich längs einer Kanalachse erstreckenden Pipettierkanal, in welchem ein wie zuvor beschrieben ausgestalteter Pipettierkolben längs der Kanalachse beweglich aufgenommen ist. Die Pipettiervorrichtung weist eine dem wenigstens einen Pipettierkanal zugeordnete, ein Magnetfeld erzeugende Statoranordnung auf, welche zur Erzeugung eines längs eines Abschnitts der Kanalachse wandernden Magnetfelds ausgebildet ist, um den Pipettierkolben durch das wandernde Magnetfeld zur Bewegung längs der Kanalachse anzutreiben. Die Längsachse des Kolbens ist im Rahmen von für Pipettiervorrichtungen üblichen Toleranzen mit der Kanalachse kollinear.

Die vorliegende Erfindung wird nachfolgend anhand der beiliegenden Zeichnungen näher erläutert werden. Es stellt dar:
- Fig. 1: eine grobschematische Längsschnittansicht einer erfindungsgemäßen Ausführungsform einer Pipettierkolben-Dichtungsanordnung der vorliegenden Anmeldung,
- Fig. 2: eine grobschematische Längsschnittansicht der Pipettierkolben-Dichtungsanordnung von Fig. 1 in ihrer betriebsmäßigen Anbringungssituation an einem Pipettierkolben in einer Pipettiervorrichtung,
- Fig. 3: eine grobschematische perspektivische Ansicht des Federkörpers der Pipettierkolben-Dichtungsanordnung der Fig. 1 und 2 in Alleinstellung und
- Fig. 4: eine grobschematische Draufsicht eines Blechrohlings vor dem Umformen zum Federkörper von Fig. 3.

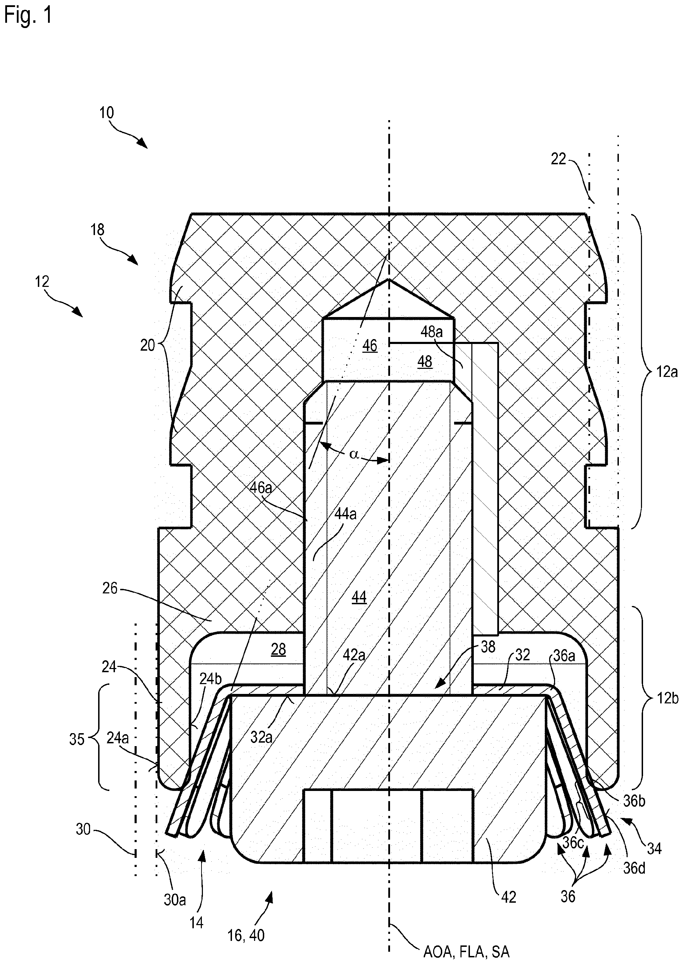

In Fig. 1 ist eine erfindungsgemäße Ausführungsform einer Pipettierkolben-Dichtungsanordnung der vorliegenden Anmeldung allgemein mit 10 bezeichnet. Fig. 1 zeigt eine grobschematische Längsschnittansicht der Pipettierkolben-Dichtungsanordnung 10 in einer die Anordnungsachse AOA enthaltenden Schnittebene. Die Schnittebene entspricht der Zeichenebene von Fig. 1.

Die Pipettierkolben-Dichtungsanordnung 10 umfasst einen Dichtungskörper 12, einen Federkörper 14 und einen Justierkörper 16.

Der Dichtungskörper 12 ist bevorzugt rotationssymmetrisch bezüglich der Anordnungsachse AOA ausgebildet. Der Dichtungskörper 12 ist im dargestellten Ausführungsbeispiel bevorzugt einstückig ausgebildet aus einem mineralisch gefüllten, temperaturbeständigen Polymer, etwa aus mit Glimmer oder/und Graphit gefüllten PTFE. Da sich PTFE als Polymer nicht spritzgusstechnisch verarbeiten lässt, ist der Dichtungskörper 12 bevorzugt spanend bearbeitet, im dargestellten Beispiel durch Drehen.

Ein Einführ-Längsendbereich 12a des Dichtungskörpers 12 ist zur Einführung in ein rohrförmiges Kolbengerüst 22 ausgebildet und weist deshalb einen kleineren Durchmesser auf als der entgegengesetzte Dichtungs-Längsendbereich 12b. Der Einführ-Längsendbereich 12a weist eine Ankerformation 18 in Gestalt von zwei geschlossen um die Anordnungsachse AOA umlaufenden Radialvorsprüngen 20 auf. Die Radialvorsprünge 20 sind axial voneinander beabstandet.

Auf der rechten Figurenseite der Fig. 1 ist mit strichpunktpunktierter Linie die Lage des rohrförmigen Kolbengerüsts 22 im betriebsbereiten Zustand angedeutet. Es ist zu erkennen, das die elastomeren Radialvorsprünge 20 der Ankerformation 18 durch das umgebende rohrförmige Kolbengerüst 22 nach Einführung des Dichtungskörpers 12 in dieses radial gestaucht sind und somit eine erhöhte Reibkraft zwischen dem Dichtungskörper 12 und dem rohrförmigen Kolbengerüst 22 erzeugen. Somit kann der Dichtungskörper 12 und damit die gesamte Pipettierkolben-Dichtungsanordnung 10 ausschließlich reibschlüssig an einem Kolbengerüst 22 gehalten sein.

Am Dichtungs-Längsendabschnitt 12b weist der Dichtungskörper 12 eine Dichtungsformation 24 auf, welche axial von einem als Dichtungsträger 26 wirkenden Abschnitt des Dichtungskörpers 12 in Richtung vom Einführ-Längsendbereich 12a weg absteht. Die Dichtungsformation 24 umgibt radial innen einen Hohlraum 28.

Die Dichtungsformation 24 weist radial außen eine um die Anordnungsachse AOA umlaufende Dichtflächenanordnung 24a auf, welche im betriebsbereiten Zustand an der Innenfläche 30a eines in Fig. 1 lediglich grobschematisch angedeuteten Pipettierzylinders 30 dichtend anliegt. Der Pipettierzylinder 30 ist in Fig. 1 der Übersichtlichkeit halber lediglich auf der linken Zeichnungsseite gezeichnet.

Auf der der Dichtflächenanordnung 24a entgegengesetzten radial nach innen weisenden Seite der Dichtungsanordnung 24 weist die Dichtungsanordnung 24 eine nach radial innen weisende Grenzfläche bzw. Anlagefläche 24b auf.

In den radial von der Dichtungsformation 24 und axial vom Dichtungsträger 26 begrenzten Hohlraum 28 ragt teilweise der Federkörper 14 ein, sodass sich der Federkörper 14 axial mit der Dichtungsformation 24 teilweise überlappt. Der axiale Überlappungsbereich von Federkörper 14 und Dichtungsformation 24 bildet einen Radial-Vorspannbereich 35, welcher mitbestimmend ist für den Betrag der vom Federkörper 14 auf die Dichtungsformation 24 ausgeübte radiale Vorspannkraft. Der Federkörper 14 wird durch den Justierkörper 16 in unten näher beschriebener Weise an Ort und Stelle gehalten.

Der Federkörper 14 umfasst einen, bevorzugt ebenen, Federträger 32 und eine vom Federträger 32 auf nur einer Seite, im dargestellten Beispiel in Richtung vom Dichtungsträger 26 weg, auskragende Federformation 34.

Der Federträger 32 erstreckt sich im betriebsbereiten Zustand des Federkörpers 14 bevorzugt ausschließlich radial, während die Federformation 34 sich ausgehend vom Federträger 32 sowohl axial als auch radial von diesem weg erstreckt.

Die Federformation 34 umfasst eine Mehrzahl, im dargestellten Beispiel 18, vorzugsweise gleichgestaltiger Blattfedern 36, welche sich ausgehend von einem Anlenkort 36a vom Federträger 32 einseitig auskragend weg erstrecken.

Wie weiter unten noch in größerem Detail ausgeführt wird, ist der Federkörper 14 aus einem Blechrohling mit einheitlicher Blechdicke als Metall-Biegebauteil hergestellt. Der Federkörper 14 weist daher über seine gesamte Erstreckung im Wesentlichen eine gleiche Bauteildicke auf, im dargestellten Ausführungsbeispiel eine Bauteildicke von 0,1 mm. Der Werkstoff des Federkörpers ist hochvergüteter, nichtrostender Federstahl.

Der Federträger 32 weist eine zentrale Öffnung 38 auf, welche vom Justierkörper 16 durchsetzt ist.

Die Anordnungsachse AOA bildet in dem in Fig. 1 gezeigten betriebsbereiten Zustand der Pipettierkolben-Dichtungsanordnung 10 auch eine Federkörper-Längsachse FLA, welche die Öffnung 38 zentral durchsetzt und welche im dargestellten Beispiel orthogonal zum Federträger 32 orientiert ist.

Der Justierkörper 16 ist eine Justierschraube 40, deren Schraubenachse SA in dem in Fig. 1 gezeigten betriebsbereiten Zustand der Pipettierkolben-Dichtungsanordnung 10 ebenfalls mit der Anordnungsachse AOA zusammenfällt. Die Justierschraube 40 weist als Justierformation einen Schraubenkopf 42 auf, von dem in an sich bekannter Weise ein Schraubenschaft 44 axial absteht. Der Schraubenschaft 44 der Justierschraube 40 ist der Teil des Justierkörpers 16, welcher die Öffnung 38 des Federträgers 32 durchsetzt. Der Federträger 32 liegt mit seiner Seite 32a, welche zu jener Seite weist, zu der die Blattfedern 36 auskragen, an der Seite 42a des Schraubenkopfes 42 an, von welcher der Schaft 44 auskragt. Die aufgrund ihrer Herstellung aus einem ebenen Blechrohling selbst jeweils im Wesentlichen ebenen Blattfedern 36 stehen mit ihren im Wesentlichen glatten radial äußeren Außenseiten 36d an einem Kontaktort 36b in Berührkontakt mit der Grenz- bzw. Anlagefläche 24b der Dichtungsformation 24.

Dieser Kontaktort 36b befindet sich längs der jeweiligen Blattfeder 36 in einem Kontaktabschnitt 36c, längs welchem die Blattfedern 36 nicht nur die größte Breite aufweisen, sondern auch eine konstante Breite aufweisen, die sich längs des Kontaktabschnitts 36c nicht ändert.

Der Schaft 44 der Justierschraube 40 kann mit seinem Außengewinde 44a in ein Innengewinde 46a einer Ausnehmung 46 im Dichtungskörper 12 eingedreht und damit im Dichtungskörper 12 verankert sein. Die Ausnehmung 46 geht bevorzugt vom Hohlraum 28 aus und schließt axial an diesen an. Alternativ, wie in der rechten Zeichnungshälfte von Fig. 1 dargestellt ist, kann in der Ausnehmung 46 in ein Innengewinde 48a einer Gewindebuchse 48 vorgesehen seien, die in die Ausnehmung 46 eingeklebt oder mechanisch durch entsprechende Vorsprünge an der Außenseite der Gewindebuchse 48, in der Gestalt ähnlich der Ankerformation 18, am Dichtungskörper 12 festgelegt ist. Die Gewindebuchse 48 ist vorzugsweise wie die Justierschraube 40 aus Metall.

Die Blattfedern 36 drücken mit ihrer glatten Außenseite 36d gegen die Anlagefläche 24b und drängen somit diese nach radial außen. Aufgrund der einstückigen Verbindung der Anlagefläche 24b mit dem Dichtflächenabschnitt 24a wird auch dieser durch die Blattfedern 36 nach radial außen vorgespannt.

Wird nun der Federkörper 14 ausgehend von der in Fig. 1 gezeigten Darstellung durch die Justierschraube 40 tiefer in die Ausnehmung 28 hineinbewegt, ändert sich zum einen der Abstand zwischen dem Anlenkort 36a der Blattfedern 36 am Federträger 32 und dem Kontaktpunkt 36b, an welchem die Blattfedern 36 an der Dichtungsformation 24 anliegen. Dadurch wird der Radial-Vorspannabschnitt 35 vergrößert. Zum anderen werden die Blattfedern 36 gegen ihre radiale Vorspannkraft um ihren jeweiligen Anlenkort 36a nach radial innen verformt. Somit ändert sich, genauer gesagt: verringert sich, durch ein tieferes axiales Einführen des Federkörpers 14 in den Hohlraum 28 ein Neigungswinkel α der Blattfedern 36 bezüglich der Anordnungsachse AOA. Durch die Verformung gegen die radiale Vorspannkraft der Blattfedern 36 wird die radial auf die Dichtungsformation 24 und damit auf den Dichtflächenabschnitt 24a ausgeübte radiale Vorspannkraft erhöht. Entsprechend kann durch Verringerung der Eindringtiefe des Federkörpers 14 in den Hohlraum 28 die radiale Vorspannkraft verringert werden. Dann wird der Radial-Vorspannabschnitt 35 verkleinert.

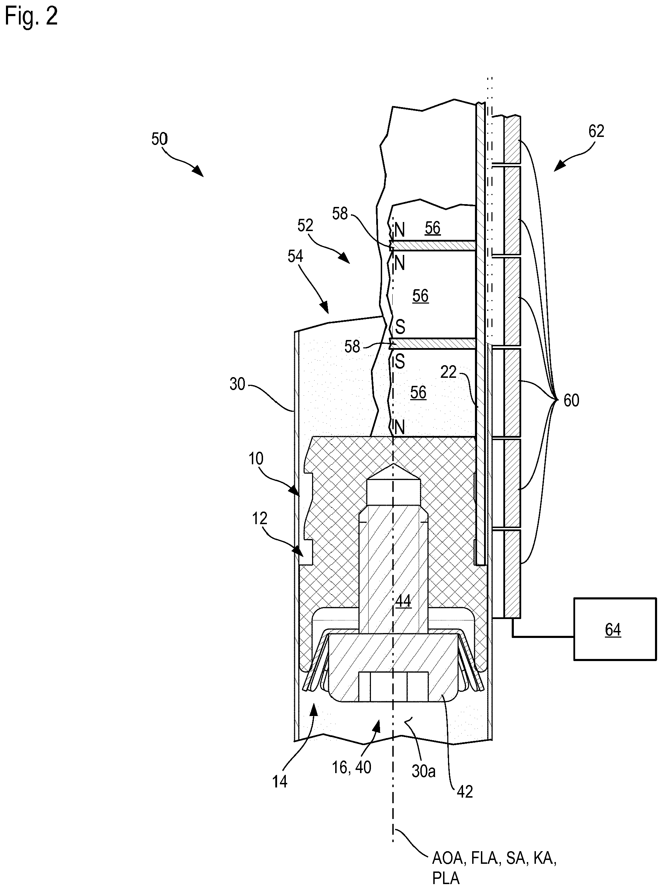

In Fig. 2 ist ein Detailausschnitt einer Pipettiervorrichtung 50 gezeigt, an der ein Pipettierkolben 52 mit der Pipettierkolben-Dichtungsanordnung 10 im Einsatz ist.

In Fig. 2 ist der Pipettierkolben 52 in einem Pipettierkanal 54 der Pipettiervorrichtung 50 aufgenommen dargestellt.

Der Pipettierkanal 54 ist definiert durch den bereits im Zusammenhang mit Fig. 1 erwähnten Pipettierzylinder 30, in welchem der Pipettierkolben 52 längs der mit der Anordnungsachse AOA zusammenfallenden Kanalachse KA beweglich aufgenommen ist.

In der rechten Zeichnungshälfte von Fig. 2 ist das rohrförmige Kanalgerüst 22 gezeigt, in dessen eines Längsende die Pipettierkolben-Dichtungsanordnung 10 eingeführt und durch die Ankerformation 18 verankert ist. In dem rohrförmigen Kanalgerüst 22 ist eine Mehrzahl von Permanentmagneten 56 aufgenommen, welche durch unmagnetische Trennscheiben 58 voneinander getrennt sind.

Die Permanentmagnete 56 sind längs der Kolbenlängsachse PLA, welche mit der Kanalachse KA in Fig. 2 zusammenfällt, aufeinander folgend angeordnet. Ihre Magnetisierungsrichtung, also die Richtung, in welche die ungleichnamigen Pole eines Permanentmagneten aufeinander folgen, ist die axiale Richtung der Kolbenlängsachse PLA. Die Permanentmagneten 56 sind dabei derart angeordnet, dass gleichnamige Pole axial unmittelbar aufeinander folgender Permanentmagneten 56 aufeinander zu weisen. Hierdurch wird ein vom Pipettierkolben 52 ausgehendes, in seiner Polarität vorteilhaft scharf getrenntes Magnetfeld in der Außenumgebung des Pipettierkolbens 52 erzeugt.

Der Pipettierkanal 54, genauer der Pipettierzylinder 30, ist radial außen von einer Mehrzahl elektrischer Spulen 60 umgeben, die den Stator 62 eines elektromagnetischen linearmotorischen Antriebs des Pipettierkolbens 52 bilden. Durch eine Steuereinrichtung 64 sind die Spulen 60 derart ansteuerbar, dass sie ein längs der Kanalachse KA wanderndes Magnetfeld erzeugen und dabei den Pipettierkolben 52 hochgenau längs der Kanalachse KA positionieren können. Die Positionierung erfolgt entweder gemäß einem in die Steuereinrichtung 46 eingegebenen Betriebsprogramm oder/und anhand von manueller Benutzereingabe.

Der Pipettierkolben 52 ist bezüglich einer zur Kolbenlängsachse PLA orthogonalen Symmetrieebene spiegelsymmetrisch ausgebildet. Die Spiegelsymmetrieachse durchsetzt im dargestellten Beispiel eine der unmagnetischen Trennscheiben 58 längs ihrer Axialmitte.

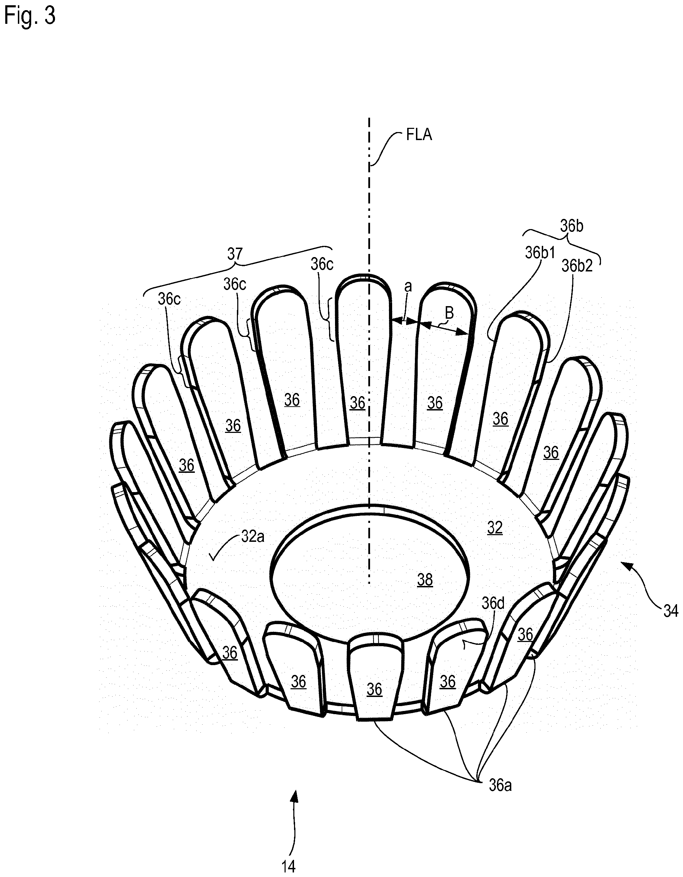

In Fig. 3 ist der Federkörper 14 in Alleinstellung gezeigt. Da alle 18 Blattfedern 36 die gleiche Gestalt aufweisen, reicht es aus, nur eine Blattfeder 36 stellvertretend für alle näher zu beschreiben.

Wie in Fig. 3 zu erkennen ist, ist der Kontaktabschnitt 36c der breiteste Längsabschnitt einer Blattfeder 36. Ausgehend vom Kontaktabschnitt 36c verjüngt sich die Blattfeder 36 kontinuierlich in beide Längsrichtungen, also sowohl zu ihrem freien Längsende hin, das zum Schutz vor Verletzungen und vor Beschädigungen der Dichtungsformation 24 abgerundet ist, als auch zum Anlenkort 36a hin. Die Gesamtheit der Kontaktabschnitte 36c der Blattfedern 36 bildet einen um die Federkörper-Längsachse FLA umlaufenden Kontaktbereich 37 der Federformation 34, mit welchem der Federkörper 14 eine radiale Vorspannkraft auf die Dichtflächenanordnung 24a ausübt.

Der Federträger 32 hat wegen der Öffnung 38 die Gestalt einer Kreisringscheibe, wobei der äußere Durchmesser der Kreisringscheibe 32 geringer ist als der Öffnungsdurchmesser des Hohlraums 28 an dem Dichtungskörper 12, um das axiale Einführen des Federkörpers 14 in den Hohlraum 28 zu ermöglichen. Die freien Längsenden der Blattfedern 36 liegen dagegen am unbelasteten Federkörper 14 auf einem Kreis, dessen Durchmesser größer ist als der Öffnungsdurchmesser des Hohlraums 28

Die im Wesentlichen ebenen oder zumindest in Umfangsrichtung um die Federkörper-Längsachse FLA ungekrümmten Blattfedern 36 bilden im dargestellten Beispiel in jeder Schnittebene orthogonal zur Federkörper-Längsachse FLA Tangenten an einen in der Schnittebene liegenden eingeschriebenen Kreis, dessen Mittelpunkt auf der Federkörper-Längsachse FLA liegt.

Was in der grobschematischen Darstellung der Fig. 3 nicht so gut zu erkennen ist, jedoch bevorzugtes Merkmal des Federkörpers 14 ist, ist, dass im betriebsbereiten Zustand am Kontaktort 36b der Abstand a zwischen in Umfangsrichtung um die Federkörper-Längsachse FLA, das ist im betriebsbereiten Zustand die Anordnungsachse AOA, unmittelbar benachbarten Kontaktabschnitten 36c etwa der Breite B einer Blattfeder 36 im Kontaktabschnitt 36c entspricht. Dies gilt für den im Kontaktabschnitt 36c gelegenen Kontaktort 36b.

Der Grund dafür ist der folgende: Da die Blattfedern 36 in Umfangsrichtung um die Anordnungsachse AOA bzw. um die Federkörper-Längsachse FLA ungekrümmt sind, die Anlagefläche 24b der Dichtungsformation 24 jedoch aus Sicht der Blattfedern in Umfangsrichtung konkav gekrümmt ist, umfasst der Anlageort 36b, mit welchem die Blattfedern 36 im Kontaktabschnitt 36c tatsächlich an der Dichtungsformation 24 anliegen, zwei in Umfangsrichtung mit Abstand voneinander gelegene Teil-Kontaktorte 36b1 und 36b2, von welchen jeder an einem in Umfangsrichtung um die Federkörper-Längsachse FLA weisenden Seitenrand des Kontaktabschnitts 36c gelegen ist. Durch die Dimensionierung des Federkörpers 14 derart, dass die Breite B der Kontaktabschnitte 36c am Kontaktort 36b im Wesentlichen dem Abstand a zwischen zwei in Umfangsrichtung unmittelbar benachbarten Kontaktabschnitten 36c entspricht, kann sichergestellt werden, dass in der betriebsbereiten Anlagesituation alle Teil-Kontaktorte 36bi, mit i=1, 2, in Umfangsrichtung äquidistant voneinander angeordnet sind. Hierdurch wird eine in Umfangsrichtung um die Anordnungsachse AOA sehr homogene radiale Vorspannwirkung erzielt.

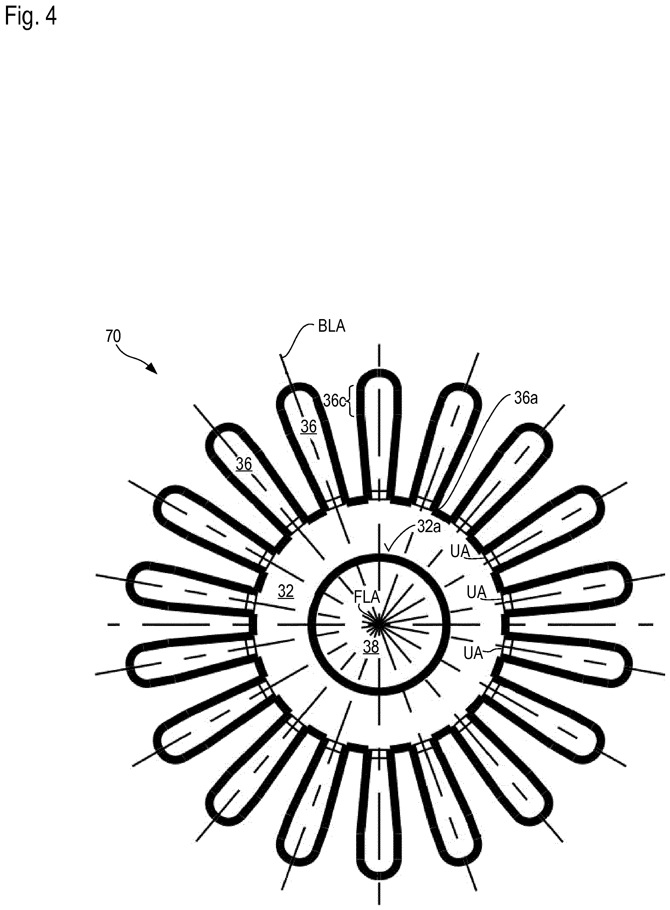

In Fig. 4 ist ein ebener Blechrohling 70 gezeigt, wie er durch Ausstanzen aus einem massiven Metallblech erzeugt werden kann. Das Stanzwerkzeug zur Herstellung des Rohlings 70 ist als Negativkontur zu der in Fig. 4 dargestellten Rohlingskontur ausgebildet. Gegebenenfalls kann die zentrale Öffnung 38 in einem gesonderten Arbeitsschritt vom übrigen Blechrohling 70 ausgestanzt werden.

Die Blattfedern 36 stehen radial von der Mitte der Öffnung 38, welche orthogonal von der Federkörper-Längsachse FLA durchsetzt ist, nach außen ab. Der spätere Federträger 32 weist eine ringförmige Gestalt auf. In einem späteren Umformschritt werden die Blattfedern 36 ausgehend von der in Fig. 4 gezeigten eben-gestreckten Stellung um Biegeachsen UA an den Anlenkorten 36a auf den Betrachter von Fig. 4 zu gebogen. Dabei weist jede Blattfeder 36 ihre eigene Biegeachse UA auf, welche tangential zu dem den Federträger 32 nach radial außen begrenzenden Kreisring verläuft.

Die Blattfedern 36 verlaufen vom Kontaktabschnitt 36c nach radial innen zum Anlenkort 32a mit geradliniger Randkontur auf ihren beiden Umfangsseiten. Die Blattfedern 36 sind bezüglich einer ihrer Blattfeder-Längsachse BLA orthogonal schneidenden Symmetrieachse spiegelsymmetrisch ausgebildet.

Der Rohling 70 ist derart mit einer Drehsymmetrie versehen, dass ein von der Federkörper-Längsachse FLA ausgehender Winkelsegmentausschnitt existiert, welcher um einen vorbestimmten Winkel um die Federkörper-Längsachse FLA gedreht werden kann und auf ein gleichgestaltetes Segment fällt. Bevorzugt ist der Federkörper 14 aus einem einzigen Basis-Winkelsegmentelement gebildet, das mehrfach in Umfangsrichtung aneinandergereiht den Federkörper 14 ergibt.

Im dargestellten Beispiel ist der kleinstmögliche Winkelsegmentausschnitt ein von der Federkörper-Längsachse FLA ausgehender Sektor von 20°, welcher mit gleicher Gestalt 18 mal am Rohling 70 und auch am daraus fertig geformten Federkörper 14 vorhanden ist.

## Patentansprüche

1. Pipettierkolben-Dichtungsanordnung (10), welche sich längs einer eine axiale Richtung definierenden Anordnungsachse (AOA) erstreckt,
- mit einem Dichtungskörper (12), umfassend einen Dichtungsträger (26) und eine vom Dichtungsträger (26) getragene Dichtungsformation (24), welche um die Anordnungsachse (AOA) umläuft, wobei die Dichtungsformation (24) auf ihrer von der Anordnungsachse (AOA) abgewandten radial äußeren Seite einen Dichtflächenabschnitt (24a) aufweist, welcher zur axial gleitenden Anlage an eine Innenfläche (30a) eines Pipettierzylinders (30) eines Pipettierkanals (54) einer Pipettiervorrichtung (50) ausgebildet ist, und
- mit einem Federkörper (14), umfassend einen Federträger (32) und eine vom Federträger (32) getragene Federformation (34), wobei die Federformation (34) um die Anordnungsachse (AOA) umläuft und wobei wenigstens ein axial mit der Dichtungsformation (24) überlappender Axialabschnitt der Federformation (34) als Radial-Vorspannabschnitt (35) radial innerhalb des Dichtflächenabschnitts (24a) angeordnet und wenigstens abschnittsweise derart in Kraft übertragendem Kontakt mit der Dichtungsformation (24) steht, dass die radial äußere Seite der Dichtungsformation (24) durch den Radial-Vorspannabschnitt (35) nach radial außen belastet ist,
**dadurch gekennzeichnet, dass** die Pipettierkolben-Dichtungsanordnung (10) einen Justierkörper (16) mit einer Justierformation (42) aufweist, wobei die Justierformation (42) axial dem Dichtungskörper (12) annäherbar und von diesem entfernbar ist, wobei eine axiale Relativbewegung der Justierformation (42) eine radiale Bewegung der Federformation (34) und damit eine Änderung der radialen Vorspannwirkung des Radial-Vorspannabschnitts (35) auf den Dichtflächenabschnitt (24a) bewirkt.

2. Pipettierkolben-Dichtungsanordnung (10) nach Anspruch 1,
**dadurch gekennzeichnet, dass** die Federformation (34) eine Mehrzahl von vom Federträger (32), vorzugsweise einseitig, auskragenden Blattfedern (36) umfasst, welche in Umfangsrichtung um die Anordnungsachse (AOA) verteilt angeordnet sind und von welchen jede gegen ihre Federvorspannkraft in radialer Richtung verlagerbar ist.

3. Pipettierkolben-Dichtungsanordnung (10) nach Anspruch 2,
**dadurch gekennzeichnet, dass** jede der Blattfedern (36) an einem Anlenkort (36a) mit dem Federträger (32) verbunden ist und an einem vom Anlenkort (36a) axial entfernt gelegenen Kontaktort (36b) mit der Dichtungsformation (24) in Kraft übertragendem Kontakt steht.

4. Pipettierkolben-Dichtungsanordnung (10) nach Anspruch 3,
**dadurch gekennzeichnet, dass** die Dichtungsformation (24) eine der Anordnungsachse (AOA) zugewandte radial innere Anlagefläche (24b) aufweist, mit welcher ein von der Anordnungsachse (AOA) abgewandter Kontaktabschnitt (36c) der Blattfedern (36), der den Kontaktort (36b) enthält, in Anlageeingriff steht.

5. Pipettierkolben-Dichtungsanordnung (10) nach Anspruch 3 oder 4,
**dadurch gekennzeichnet, dass** der Kontaktabschnitt (36c) der Blattfedern (36), in welchem der Kontaktort (36b) liegt, mit Abstand von ihrem jeweiligen Anlenkort (36a) gelegen ist, wobei längs dem Kontaktabschnitt (36a) die in Umfangsrichtung um die Anordnungsachse (AOA) zu messende Breite (B) der Blattfedern (36) konstant ist und wobei der in Umfangsrichtung um die Anordnungsachse (AOA) zu messende Abstand (a) zwischen zwei in Umfangsrichtung benachbarten Blattfedern (36) am Kontaktort (36b) betragsmäßig um nicht mehr als 10 % von der Breite (B) der Blattfedern (36) im Kontaktabschnitt (36c) verschieden ist, vorzugsweise um nicht mehr als 5 % verschieden ist, besonders bevorzugt gleich der Breite (B) der Blattfedern (36) im Kontaktabschnitt (36c) ist.

6. Pipettierkolben-Dichtungsanordnung (10) nach einem der Ansprüche 3 bis 5,
**dadurch gekennzeichnet, dass** durch eine Relativbewegung der Justierformation (42) relativ zum Dichtungskörper (12) der axiale Abstand zwischen Anlenkort (36a) und Kontaktort (36b) veränderbar ist.

7. Pipettierkolben-Dichtungsanordnung (10) nach einem der Ansprüche 2 bis 6,
**dadurch gekennzeichnet, dass** durch eine Relativbewegung der Justierformation (42) relativ zum Dichtungskörper (12) eine Neigung (a) der Blattfedern (36) relativ zur Anordnungsachse (AOA) veränderbar ist.

8. Pipettierkolben-Dichtungsanordnung (10) nach einem der Ansprüche 2 bis 7,
**dadurch gekennzeichnet, dass** die Blattfedern (36) äquidistant um die Anordnungsachse (AOA) herum verteilt angeordnet sind.

9. Pipettierkolben-Dichtungsanordnung (10) nach einem der Ansprüche 2 bis 8,
**dadurch gekennzeichnet, dass** die Blattfedern (36) gleiche Gestalt aufweisen.

10. Pipettierkolben-Dichtungsanordnung (10) nach einem der Ansprüche 2 bis 9,
**dadurch gekennzeichnet, dass** wenigstens ein Teil der Blattfedern (36) an einem vom Federträger (32) ferner gelegenen Ort (36c) eine größere in Umfangsrichtung um die Anordnungsachse (AOA) zu messende Breite aufweisen als an einem dem Federträger näher gelegenen Ort (36a).

11. Pipettierkolben-Dichtungsanordnung (10) nach einem der vorhergehenden Ansprüche,
**dadurch gekennzeichnet, dass** der Federkörper (14) ein Biegebauteil ist, wobei die Federformation (34) bezüglich des Federträgers (32) um eine Biegeachsenanordnung gebogen ist.

12. Pipettierkolben-Dichtungsanordnung (10) nach einem der vorhergehenden Ansprüche,
**dadurch gekennzeichnet, dass** der Federkörper (14) ein Metallbauteil ist.

13. Pipettierkolben-Dichtungsanordnung (10) nach einem der vorhergehenden Ansprüche,
**dadurch gekennzeichnet, dass** der Federkörper (14) über seine im Wesentlichen gesamte Erstreckung eine einheitliche Bauteildicke aufweist.

14. Pipettierkolben-Dichtungsanordnung (10) nach einem der vorhergehenden Ansprüche,
**dadurch gekennzeichnet, dass** der Federkörper (14), insbesondere der Federträger (32), vom Justierkörper (16) durchsetzt ist.

15. Pipettierkolben-Dichtungsanordnung (10) nach einem der vorhergehenden Ansprüche,
**dadurch gekennzeichnet, dass** der Justierkörper (16) eine Stellformation (44a) aufweist, welche sich im Formschlusseingriff mit einer Gegenstellformation (46a, 48a) des Dichtungskörpers (12) befindet, wobei durch Relativbewegung von Stellformation (44a) und Gegenstellformation (46a, 48a) die Justierformation (42) axial an den Dichtungskörper (12) annäherbar und von diesem entfernbar ist.

16. Pipettierkolben-Dichtungsanordnung (10) nach Anspruch 15,
**dadurch gekennzeichnet, dass** der Justierkörper (16) eine Justierschraube (40) ist, wobei bevorzugt ein Schraubenkopf (42) der Justierschraube (40) die Justierformation (42) ist.

17. Pipettierkolben-Dichtungsanordnung (10) nach einem der vorhergehenden Ansprüche,
**dadurch gekennzeichnet, dass** der Dichtungsträger (26) und die Dichtungsformation (24) einstückig ausgebildet sind.

18. Pipettierkolben-Dichtungsanordnung (10) nach Anspruch 17, unter Einbeziehung des Anspruchs 15,
**dadurch gekennzeichnet, dass** der Dichtungsträger (26), die Dichtungsformation (24) und ein die Gegenstellformation (46a, 48a) aufweisender Abschnitt des Dichtungskörpers (12) einstückig ausgebildet sind.

19. Pipettierkolben (52), umfassend ein Kolbengerüst (22), eine Mehrzahl von Permanentmagneten (56), und wenigstens eine Pipettierkolben-Dichtungsanordnung (10) nach einem der vorhergehenden Ansprüche an einem Längsende des Pipettierkolbens (52), wobei die Anordnungsachse (AOA) mit einer Längsachse (PLA) des Kolbens (52) kollinear ist.

20. Pipettiervorrichtung (50) mit wenigstens einem sich längs einer Kanalachse (KA) erstreckenden Pipettierkanal (54), in welchem ein Pipettierkolben (52) nach Anspruch 19 längs der Kanalachse (KA) beweglich aufgenommen ist, mit einer dem wenigstens einen Pipettierkanal (54) zugeordneten Magnetfeld erzeugenden Statoranordnung (62), welche zur Erzeugung eines längs eines Abschnitts der Kanalachse (KA) wandernden Magnetfelds ausgebildet ist, um den Pipettierkolben (52) durch das wandernde Magnetfeld zur Bewegung längs der Kanalachse (KA) anzutreiben, wobei die Längsachse (PLA) des Kolbens (52) mit der Kanalachse (KA) kollinear ist.

21. Federkörper (14) für eine Pipettierkolben-Dichtungsanordnung (10) nach einem der vorhergehenden Ansprüche, umfassend einen Federträger (32) und eine Federformation (34) mit einer Mehrzahl von vom Federträger (32) zur gleichen Seite abstehenden Blattfedern (36), wobei der Federkörper (16) ein einstückig ausgebildeter Federkörper (16) ist,
**dadurch gekennzeichnet, dass** der Federkörper (16) als einstückiges Biegebauteil ausgebildet ist, wobei die Federformation (34) bezüglich des Federträgers (32) um eine Biegeachsenanordnung (UA) gebogen ist, wobei der Federkörper (16) optional weitere Federkörper-Merkmale aufweist, wie sie in den kennzeichnenden Teilen eines oder mehrerer der vorhergehenden Ansprüche definiert sind.
